# EUROPEAN PATENT APPLICATION

(11) **EP 4 726 497 A1**
(43) Date of publication of application: **15.04.2026**
(21) Application number: 24843355.9
(22) Date of filing: 27.06.2024
(51) Int. Cl.: G06F 1/16

(54) **ELECTRONIC DEVICE COMPRISING BLOCK**

(30) Priority: 18.07.2023 KR 20230092954; 06.09.2023 KR 20230118561
(71) Applicant: Samsung Electronics Co., Ltd., Suwon-si, Gyeonggi-do 16677 (KR)
(72) Inventor: KIM, Yongwon, Suwon-si Gyeonggi-do 16677 (KR); PARK, Changhee, Suwon-si Gyeonggi-do 16677 (KR)
(74) Representative: Gulde & Partner
(86) International application number: PCT/KR2024/008988
(87) International publication number: WO 2025/018635

(57) **Abstract**

The present disclosure relates to an electronic device. An electronic device according to an embodiment of the present disclosure comprises: a first housing; a second housing rotatably coupled to the first housing; a hinge which connects the first housing and the second housing to be rotatable; a flexible display comprising a region corresponding to the first housing and a region corresponding to the second housing; a hinge cover which covers the hinge and is at least partially disposed between the first housing and the second housing; a flexible circuit board which extends across the hinge cover from the position corresponding to the first housing toward the position corresponding to the second housing; and a block which is arranged to be spaced apart from the flexible circuit board.

## Description

### [Technical Field]

Various embodiments of the disclosure relate to an electronic device, e.g., an electronic device including a block.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function, such as for mobile banking, and a scheduling or e-wallet function. These electronic devices have been downsized to be conveniently carried by users.

### [Detailed Description of the Invention]

### [Technical Solution]

An electronic device according to an embodiment of the disclosure may include a first housing, a second housing rotatably coupled to the first housing, a hinge rotatably connecting the first housing and the second housing, a flexible display including an area corresponding to the first housing and an area corresponding to the second housing, a hinge cover covering the hinge, at least a portion thereof being disposed between the first housing and the second housing, a flexible circuit board extending across the hinge cover from a position corresponding to the first housing toward a position corresponding to the second housing, and a block spaced apart from the flexible circuit board.

An electronic device according to an embodiment of the disclosure may include a first housing, a second housing rotatably coupled to the first housing, a hinge rotatably connecting the first housing and the second housing, a flexible display including an area corresponding to the first housing and an area corresponding to the second housing, a hinge cover including a cover plate disposed between the first housing and the second housing and a cover wall protruding from the cover plate, a flexible circuit board extending across the hinge cover from a position corresponding to the first housing toward a position corresponding to the second housing, and a block coupled to the cover wall and forming a gap with the cover plate.

### [Brief Description of Drawings]

FIG. 1 is a block diagram illustrating an electronic device in a network environment according to an embodiment.
FIG. 2 is a view illustrating an unfolded state of an electronic device according to an embodiment of the disclosure.
FIG. 3 is a view illustrating a folded state of an electronic device according to an embodiment of the disclosure.
FIG. 4 is an exploded perspective view illustrating an electronic device according to an embodiment of the disclosure.
FIG. 5 is a partial exploded perspective view illustrating an electronic device according to an embodiment of the disclosure.
FIG. 6 is a partial exploded perspective view illustrating an electronic device according to an embodiment of the disclosure.
FIG. 7A is a partial cross-sectional view illustrating an electronic device according to an embodiment of the disclosure.
FIG. 7B is a partial cross-sectional view illustrating an electronic device according to an embodiment of the disclosure.
FIG. 8A is an enlarged view illustrating a portion of an electronic device cut away according to an embodiment of the disclosure.
FIG. 8B is an enlarged view illustrating a portion of an electronic device cut away according to an embodiment of the disclosure.
FIG. 9A is a partial cross-sectional view illustrating an electronic device according to an embodiment of the disclosure.
FIG. 9B is a partial cross-sectional view illustrating an electronic device according to an embodiment of the disclosure.
FIG. 9C is a partial cross-sectional view illustrating an electronic device according to an embodiment of the disclosure.
FIG. 9D is a partial cross-sectional view illustrating an electronic device according to an embodiment of the disclosure.
FIG. 10 illustrates a portion of an electronic device according to an embodiment of the disclosure.
FIG. 11 is an enlarged view illustrating a portion of an electronic device according to an embodiment of the disclosure.
FIG. 12A is a partial cross-sectional view illustrating an electronic device according to an embodiment of the disclosure.
FIG. 12B is a cross-sectional view illustrating a portion of an electronic device according to an embodiment of the disclosure.
FIG. 13 is a block diagram illustrating a method for manufacturing an electronic device according to an embodiment of the disclosure.
FIG. 14A is a view illustrating a method for manufacturing an electronic device according to an embodiment of the disclosure.
FIG. 14B is a view illustrating a method for manufacturing an electronic device according to an embodiment of the disclosure.
FIG. 14C is a view illustrating a method for manufacturing an electronic device according to an embodiment of the disclosure.
FIG. 14D is a view illustrating a method for manufacturing an electronic device according to an embodiment of the disclosure.
FIG. 14E is a view illustrating a method for manufacturing an electronic device according to an embodiment of the disclosure.
FIG. 14F is a view illustrating a method for manufacturing an electronic device according to an embodiment of the disclosure.
FIG. 14G is a view illustrating a method for manufacturing an electronic device according to an embodiment of the disclosure.
FIG. 14H is a view illustrating a method for manufacturing an electronic device according to an embodiment of the disclosure.

### [Mode for Carrying out the Invention]

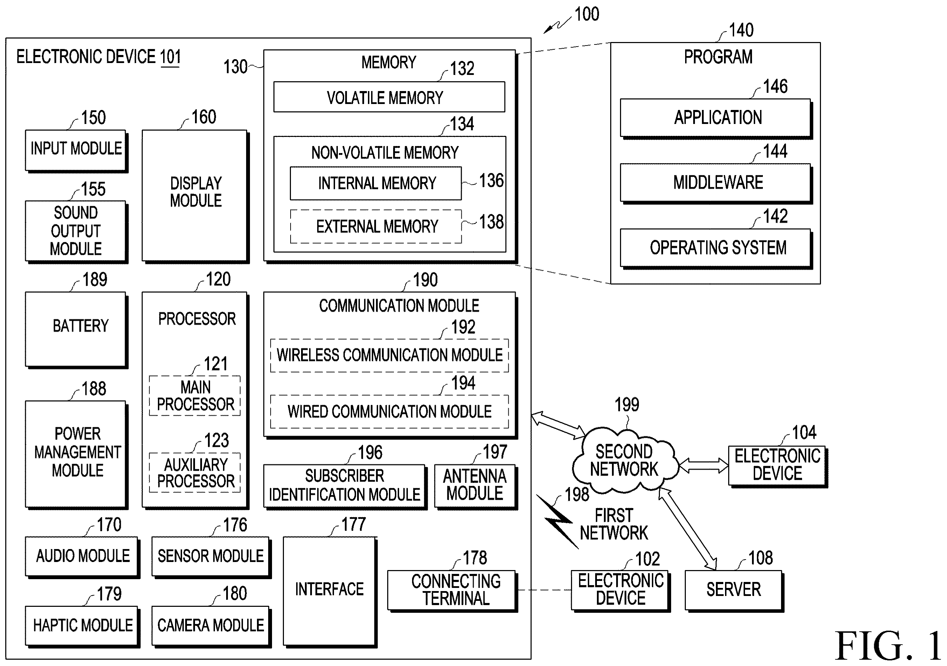

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

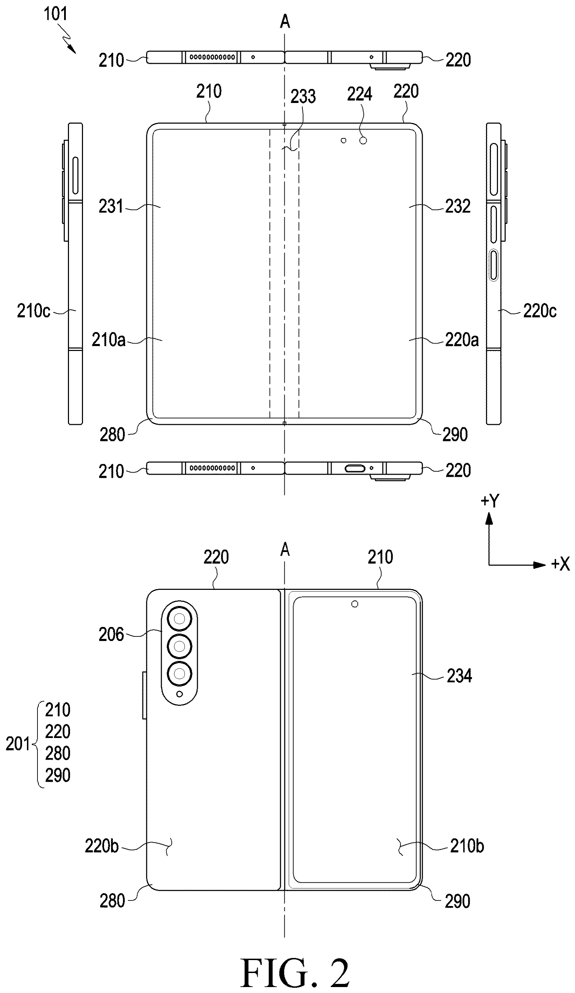

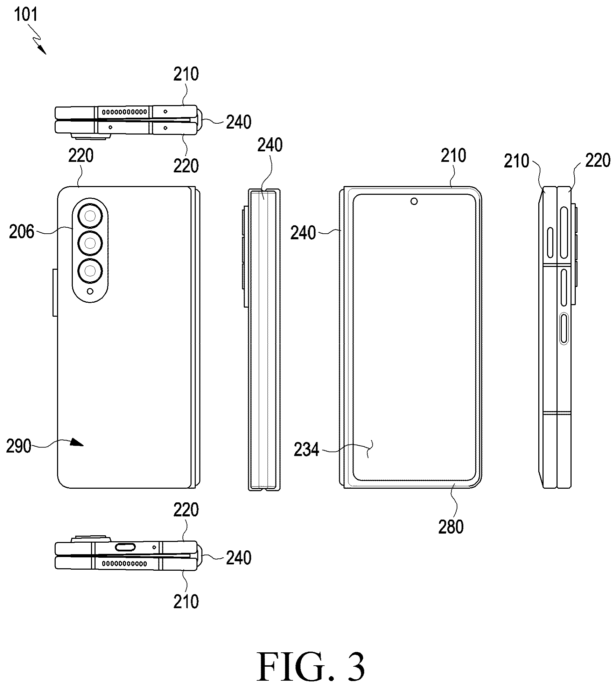

FIG. 2 is a view illustrating an unfolded state of an electronic device according to an embodiment of the disclosure. FIG. 3 is a view illustrating a folded state of an electronic device according to an embodiment of the disclosure.

Referring to FIGS. 2 and 3, an electronic device 101 may include a housing 201, a hinge cover 240 covering a foldable portion of the housing 201, and a display 230 disposed in a space formed by the housing 201. According to an embodiment, the surface where the screen output from the display 230 is exposed is defined as a front surface (e.g., the first front surface 210a and the second front surface 220a) of the electronic device 101. A surface opposite to the front surface is defined as a rear surface (e.g., the first rear surface 210b and the second rear surface 220b) of the electronic device 101. Further, a surface surrounding the space between the front surface and the rear surface is defined as a side surface (e.g., the first side surface 210c and the second side surface 220c) of the electronic device 101. The side surface of the electronic device 101 may be a side surface of at least one of the first housing 210 or the second housing 220. The electronic device 101 of FIGS. 2 and 3 may be referred to as a foldable electronic device, a portable electronic device, or a portable foldable electronic device. According to an embodiment, the housing 201 may be referred to as a foldable housing. The display 230 may be referred to as a "flexible display."

According to an embodiment, the housing 201 may include a first housing 210, a second housing 220 rotatable with respect to the first housing 210, a first rear cover 280, and a second rear cover 290. The housing 201 of the electronic device 101 are not limited to the shape and coupling shown in FIGS. 2 and 3 but may rather be implemented in other shapes or via a combination and/or coupling of other components. For example, in an embodiment, the first housing 210 and the first rear cover 280 may be integrally formed with each other, and the second housing 220 and the second rear cover 290 may be integrally formed with each other.

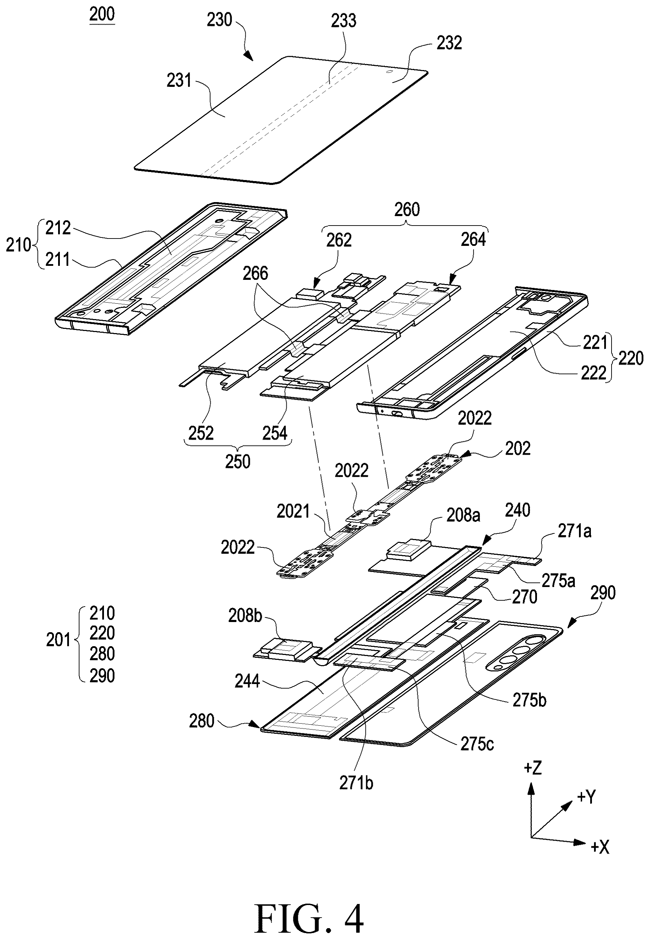

According to an embodiment, the first housing 210 may be connected to a hinge structure (e.g., the hinge assembly 202 of FIG. 4) and may include a first front surface 210a facing in a first direction and a first rear surface 210b facing in a second direction opposite to the first direction. The second housing 220 may be connected to the hinge assembly 202 and may include a second front surface 220a facing in a third direction and a second rear surface 220b facing in a fourth direction opposite to the third direction, and may rotate from the first housing 210 about the hinge assembly 202. Accordingly, the electronic device 101 may be changed to a folded state or an unfolded state. In the folded state of the electronic device 101, the first front surface 210a may face the second front surface 220a and, in the unfolded state, the third direction may be identical to the first direction. Hereinafter, unless otherwise mentioned, directions are described based on the unfolded state of the electronic device 101.

According to an embodiment, the first housing 210 and the second housing 220 are disposed on both sides of the folding axis A and are overall symmetrical in shape with respect to the folding axis A. As set forth below, the first housing 210 and the second housing 220 may have different angles or distances formed therebetween depending on whether the electronic device 101 is in the unfolded, folded, or intermediate state. According to an embodiment, the second housing 220 further includes the sensor area 224 where sensors (e.g., front camera) are disposed but, in the remaining area, the second housing 220 may be symmetrical in shape with the first housing 210.

According to an embodiment, there may be provided a plurality of (e.g., two) folding axes A parallel to each other. In the disclosure, the folding axis A is provided along the length direction (Y-axis direction) of the electronic device 101, but the direction of the folding axis A is not limited thereto. For example (not shown), the electronic device 101 may include the folding axis A extending along the width direction (e.g., X-axis direction).

According to an embodiment, the electronic device 101 may include a structure to which a digital pen may be attached. For example, the electronic device 101 may include a magnetic substance configured to attach the digital pen to a side surface of the first housing 210 or a side surface of the second housing 220. According to an embodiment, the electronic device 101 may include a structure into which a digital pen may be inserted. For example, a hole (not shown) into which the digital pen may be inserted may be formed in a side surface of the first housing 210 or a side surface of the second housing 220 of the electronic device 101.

According to an embodiment, the first housing 210 and the second housing 220 may at least partially be formed of a metal or non-metallic material with a rigidity selected to support the display 230. At least a portion formed of metal may provide a ground plane of the electronic device 101 and may be electrically connected with a ground line formed on a printed circuit board (e.g., the board unit 260 of FIG. 4).

According to an embodiment, the sensor area 224 may be formed adjacent to an edge or corner of the second housing 220 and to have a predetermined area. However, the placement, shape, or size of the sensor area 224 is not limited to those illustrated. According to an embodiment, the sensor area 224 may be provided in a different corner of the second housing 220 or in any area between the top corner and the bottom corner or in the first housing 210. In an embodiment, components for performing various functions, embedded in the electronic device 101, may be exposed through the sensor area 224 or one or more openings in the sensor area 224 to the front surface of the electronic device 101. In various embodiments, the components may include various kinds of sensors. The sensor may include, e.g., at least one of a front camera, a receiver, or a proximity sensor.

According to an embodiment, the first rear cover 280 may be disposed on one side of the folding axis A on the rear surface of the electronic device 101 and have, e.g., a substantially rectangular periphery which may be surrounded by the first housing 210. Similarly, the second rear cover 290 may be disposed on the opposite side of the folding axis A on the rear surface of the electronic device 101 and its periphery may be surrounded by the second housing 220.

According to an embodiment, the first rear cover 280 and the second rear cover 290 may be substantially symmetrical in shape with respect to the folding axis (axis A). However, the first rear cover 280 and the second rear cover 290 are not necessarily symmetrical in shape. According to an embodiment, the electronic device 101 may include the first rear cover 280 and the second rear cover 290 in various shapes.

According to an embodiment, the first rear cover 280, the second rear cover 290, the first housing 210, and the second housing 220 may form a space where various components (e.g., a printed circuit board or battery) of the electronic device 101 may be disposed. According to an embodiment, one or more components may be arranged or visually exposed on/through the rear surface of the electronic device 101. For example, at least a portion of a sub display (e.g., the sub display 244 of FIG. 4) may be visually exposed through at least a portion of the first rear cover 280. According to an embodiment, one or more components or sensors may be visually exposed through at least a portion of the first rear cover 290. According to various embodiments, the sensor may include a proximity sensor and/or a camera module 206 (e.g., rear camera).

According to an embodiment, a front camera exposed to the front surface of the electronic device 101 through one or more openings provided in the sensor area 224 or the camera module 206 exposed through at least a portion of the second rear cover 290 may include one or more lenses, an image sensor, and/or an image signal processor. In an embodiment, two or more lenses (infrared camera, wide-angle and telephoto lens) and image sensors may be disposed on one surface of the electronic device 101.

According to an embodiment, the hinge cover 240 may be disposed between the first housing 210 and the second housing 220 to hide the internal components (e.g., the hinge assembly 202 of FIG. 4). According to an embodiment, the hinge cover 240 may be hidden by a portion of the first housing 210 and second housing 220 or be exposed to the outside depending on the state (e.g., the unfolded state (e.g., flat state) or folded state) of the electronic device 101.

According to an embodiment, as shown in FIG. 2, in the unfolded state of the electronic device 101, the hinge cover 240 may be hidden, and thus not exposed, by the first housing 210 and the second housing 220. As another example, as shown in FIG. 3, in the folded state (e.g., a fully folded state) of the electronic device 101, the hinge cover 240 may be exposed to the outside between the first housing 210 and the second housing 220. As another example, in an intermediate state in which the first housing 210 and the second housing 220 are folded with a certain angle, the hinge cover 240 may be partially exposed to the outside between the first housing 210 and the second housing 220. However, in this case, the exposed area may be smaller than that in the completely folded state. In an embodiment, the hinge cover 240 may include a curved surface.

According to an embodiment, the display 230 may be disposed in a space formed by the housing 201. For example, the display 230 may be seated on a recess formed by the housing 201 and may occupy most of the front surface of the electronic device 101. Thus, the front surface of the electronic device 101 may include the display 230 and a partial area of the first housing 210 and a partial area of the second housing 220, which are adjacent to the display 230. The rear surface of the electronic device 101 may include a first rear cover 280, a partial area of the first housing 210 adjacent to the first rear cover 280, a second rear cover 290, and a partial area of the second housing 220 adjacent to the second rear cover 290.

According to an embodiment, the display 230 may include a plurality of displays spaced apart from each other. For example, the display 230 may include a first display area 231 disposed on the first housing 210 and a second display area 232 disposed on the second housing 220. According to an embodiment, the first display area 231 and the second display area 232 may rotate about the folding axis A.

According to an embodiment, the display 230 may mean a display at least a portion of which may be transformed into a flat or curved surface. For example, the display 230 may be a foldable or flexible display. According to an embodiment, the display 230 may include a folding area 233, a first display area 231 disposed on one side of the folding area 233 (e.g., the left side of the folding area 233 of FIG. 2), and a second display area 232 disposed on the opposite side of the folding area 233 (e.g., the right side of the folding area 233 of FIG. 2). However, the segmentation of the display 230 is merely an example, and the display 230 may be divided into a plurality of (e.g., four or more, or two) areas depending on the structure or function of the display 230. For example, in the embodiment illustrated in FIG. 2, the display 230 may be divided into the areas by the folding area 233 or folding axis (axis A) extending in parallel with the Y axis but, according to an embodiment, the display 230 may be divided into the areas with respect to another folding area (e.g., a folding area parallel with the X axis) or another folding axis (e.g., a folding axis parallel with the X axis). According to an embodiment, the display 230 may be coupled with or disposed adjacent to a touch detection circuit, a pressure sensor capable of measuring the strength (pressure) of touches, and/or a digitizer (not shown) for detecting a magnetic field-type stylus pen.

According to an embodiment, the first display area 231 and the second display area 232 may be overall symmetrical in shape with respect to the folding area 233. According to an embodiment (not shown), unlike the first display area 231, the second display area 232 may include a notch depending on the presence of the sensor area 224, but the rest may be symmetrical in shape with the first display area 231. For example, the first display area 231 and the second display area 232 may include symmetrical portions and asymmetrical portions.

Described below are the operation of the first housing 210 and the second housing 220 and each area of the display 230 depending on the state (e.g., the unfolded state (or flat state) and folded state) of the electronic device 101.

According to an embodiment, when the electronic device 101 is in the unfolded state (flat state) (e.g., FIG. 2), the first housing 210 and the second housing 220 may be disposed to face in the same direction while being angled substantially at 180 degrees therebetween. The surface of the first display area 231 and the surface of the second display area 232 of the display 230 may be angled at 180 degrees therebetween while facing in the same direction (e.g., forward of the front surface of the electronic device). The folding area 233 may form the same plane with the first display area 231 and the second display area 232.

According to an embodiment, when the electronic device 101 is in the folded state (e.g., FIG. 3), the first housing 210 and the second housing 220 may be disposed to face each other. The surface of the first display area 231 and the surface of the second display area 232 of the display 230 may be angled at a small angle (e.g., an angle between 0 degrees and 10 degrees) therefrom while facing each other. At least a portion of the folding area 233 may be formed as a curve having a predetermined curvature.

According to an embodiment, when the electronic device 101 is in the intermediate state (not shown), the first housing 210 and the second housing 220 may be disposed at a certain angle therebetween. The surface of the first display area 231 of the display 230 and the surface of the second display area 232 may form an angle which is larger than the angle in the folded state and smaller than the angle in the unfolded state. The folding area 233 may at least partially have a curved surface with a predetermined curvature and, in this case, the curvature may be smaller than that when it is in the folded state.

FIG. 4 is an exploded perspective view illustrating an electronic device according to an embodiment of the disclosure;

Referring to FIG. 4, an electronic device 101 may include a housing 201, a display 230, a hinge assembly 202, a battery 250, and a board unit 260. The housing 201 may include a first housing 210, a second housing 220, a first rear cover 280, and a second rear cover 290. The configuration of the first housing 210, the second housing 220, the hinge cover 240, the first rear cover 280, and the second rear cover 290 of FIG. 4 may be identical in whole or part to the configuration of the first housing 210, the second housing 220, the hinge cover 240, the first rear cover 280, and the second rear cover 290 of FIG. 2 and/or FIG. 3.

According to an embodiment, the first housing 210 and the second housing 220 may be assembled together to be coupled to two opposite sides of the hinge assembly 202. According to an embodiment, the first housing 210 may include a first supporting area 212 that may support the components (e.g., the first circuit board 262 and/or the first battery 252) of the electronic device 101 and a first sidewall 211 surrounding at least a portion of the first supporting area 212. The first sidewall 211 may include a first side surface (e.g., the first side surface 210c of FIG. 2) of the electronic device 101. According to an embodiment, the second housing 220 may include a second supporting area 222 that may support the components (e.g., the second circuit board 264 and/or the second battery 254) of the electronic device 101 and a second sidewall 221 surrounding at least a portion of the second supporting area 222. The second sidewall 221 may include a second side surface (e.g., the second side surface 220c of FIG. 2) of the electronic device 101.

According to an embodiment, the display 230 (e.g., first display) may include a first display area 231, a second display area 232, a folding area 233, and a sub display 244 (e.g., second display). The configuration of the first display area 231, the second display area 232, and the folding area 233 of FIG. 3 may be identical in whole or part to the configuration of the first display area 231, the second display area 232, and the folding area 233 of FIG. 1 and/or FIG. 2.

According to an embodiment, the sub display 244 may display screen in a different direction from the display areas 231 and 232. For example, the sub display 244 may output screen in a direction opposite to the first display area 231. According to an embodiment, the sub display 244 may be disposed on the first rear cover 280.

According to an embodiment, the battery 250 may include a first battery 252 disposed in the first housing 210 and a second battery 254 disposed in the second housing 220. According to an embodiment, the first battery 252 may be connected with the first circuit board 262, and the second battery 254 may be connected to the second circuit board 264. According to an embodiment, the battery 250 may supply power to at least one component of the electronic device 101. According to an embodiment, the battery 250 may include, e.g., a non-rechargeable primary battery, a rechargeable secondary battery, or a fuel cell.

According to an embodiment, the board unit 260 may include a first circuit board 262 disposed in the first housing 210 and a second circuit board 264 disposed in the second housing 220. According to an embodiment, the first circuit board 262 and the second circuit board 264 may be electrically connected by at least one flexible circuit board 266. According to an embodiment, at least a portion of the flexible circuit board 266 may be disposed across the hinge assembly 202. According to an embodiment, the first circuit board 262 and the second circuit board 264 may be disposed in a space formed by the first housing 210, the second housing 220, the first rear cover 280, and the second rear cover 290. Components for implementing various functions of the electronic device 101 may be disposed on the first circuit board 262 and the second circuit board 264.

According to an embodiment, the hinge assembly 202 may include a hinge 2021. The hinge 2021 may rotatably couple the first housing 210 and the second housing 220. A plurality of hinges 2021 may be disposed to be spaced apart from each other in the length direction of the hinge assembly 202. The hinge assembly 202 may include a support plate 2022. The support plate 2022 may support at least a portion of the display 230. A plurality of support plates 2022 may be disposed to be spaced apart from each other in the length direction of the hinge assembly 202.

According to an embodiment, the electronic device 101 may include speakers 208a and 208b. According to an embodiment, the speakers 208a and 2008b may convert the electric signal into sound. According to an embodiment, the speakers 208a and 208b may be disposed in a space formed by the first housing 210, the second housing 220, the first rear cover 280, and the second rear cover 290. According to an embodiment, the speakers 208a and 208b may include an upper speaker 208a positioned in an upper portion (+Y direction) of the electronic device 101 and a lower speaker 208b positioned in a lower portion (-Y direction) of the electronic device 101. In the disclosure, the speakers 208a and 208b are illustrated as positioned in one housing (e.g., the first housing 210 of FIG. 4), but this is an optional structure. For example, the speakers 208a and 208b may be positioned in at least one of the first housing 210 or the second housing 220. The configuration of the speakers 208a and 208b of FIG. 4 may be identical in whole or part to the configuration of the sound output module 155 of FIG. 1.

According to an embodiment, the electronic device 101 may include a rear member 270 (or rear case). According to an embodiment, the rear member 270 may be disposed in the housing 201 (e.g., the second housing 220). According to an embodiment, the rear member 270 may accommodate at least one antenna 275.

According to an embodiment, the electronic device 101 may include an antenna 275. The antennas 275a and 275b may include, e.g., an ultra-wide band (UWB) antenna 275a, a near-field communication (NFC) antenna, a wireless charging antenna, and/or a magnetic secure transmission (MST) antenna 275b. The antenna 275 may perform short-range communication with, e.g., an external device or may wirelessly transmit or receive power necessary for charging.

According to an embodiment, an antenna structure may be formed by a portion of the housing 201 or a combination thereof. For example, the antenna 275 may include a communication antenna 275c at least a portion of which is exposed to the outside and which forms at least a portion of the exterior of the electronic device 101. The communication antenna 275c may be used for communication (e.g., Wi-Fi) with an external electronic device. The communication antenna 275c may be connected to the upper portion 271a or the lower portion 271b of the rear member 270.

In the following detailed description, a configuration in which a pair of housings (or referred to as a 'housing') are coupled to be rotatable by a hinge structure is described as an example. However, it should be noted that the electronic device according to various embodiments of the disclosure is not limited thereto. For example, according to various embodiments, the electronic device may include three or more housings. In the embodiment disclosed below, a "pair of housings" may mean two rotatably-coupled housings among three or more housings.

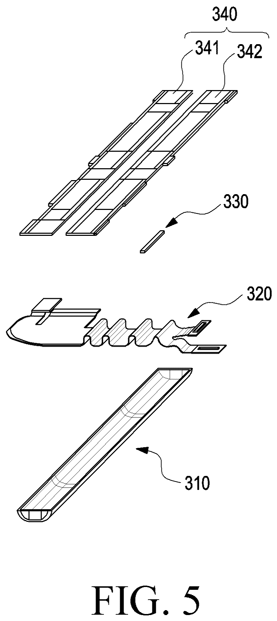

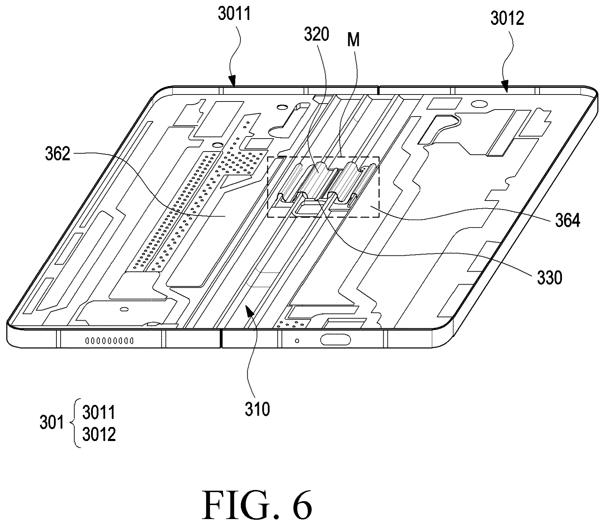

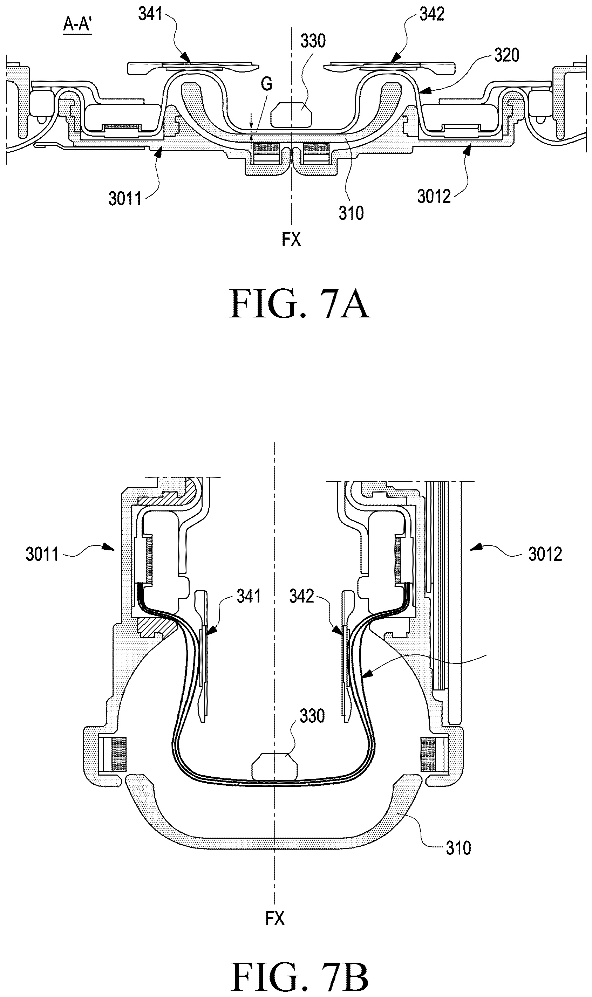

FIG. 5 shows an exploded view illustrating a hinge cover 310, a flexible circuit board 320, a block 330, and a support plate 340 according to an embodiment of the disclosure. FIG. 6 is a view showing a state in which the hinge cover 310, the flexible circuit board 320, and the block 330 are coupled to a housing 301. Components described with reference to FIGS. 5 and 6 may be identical in whole or part to the components described with reference to FIGS. 1 to 4. Components described with reference to FIGS. 5 and 6 may be identical in whole or part to the components described with reference to FIGS. 7 to 14H.

According to an embodiment, an electronic device (e.g., the electronic device 200 of FIG. 4) may include a hinge cover 310. The hinge cover 310 may be coupled to a housing 301. A hinge assembly (e.g., the hinge assembly 202 of FIG. 4) may include the hinge cover 310. The hinge cover 310 may be the same as the hinge cover 240 of FIG. 4. A plurality of hinges (e.g., the hinge 2021 of FIG. 4) may be seated on the hinge cover 310. The hinge cover 310 may support the plurality of hinges (e.g., the hinge 2021 of FIG. 4).

According to an embodiment, the electronic device (e.g., the electronic device 200 of FIG. 4) may include a flexible circuit board 320. The flexible circuit board 320 may connect a first circuit board 362 and a second circuit board 364. The first circuit board 362 may be the same as the first circuit board 262 illustrated in FIG. 4. The second circuit board 364 may be the same as the second circuit board 264 illustrated in FIG. 4. The flexible circuit board 320 may be the same as the flexible circuit board 266 illustrated in FIG. 4. The flexible circuit board 320 may extend across the hinge cover 310. The first circuit board 362 may be disposed on one side with respect to the hinge cover 310, and the second circuit board 364 may be disposed on the other side opposite to the first circuit board 362 with respect to the hinge cover 310. The flexible circuit board 320 may connect the first circuit board 362 and the second circuit board 364 that are opposite each other with respect to the hinge cover 310.

According to an embodiment, the electronic device (e.g., the electronic device 200 of FIG. 4) may include a block 330. The block 330 may be disposed inside the hinge cover 310. The block 330 may support the flexible circuit board 320.

According to an embodiment, the electronic device (e.g., the electronic device 200 of FIG. 4) may include a support plate 340. The support plate 340 may support a display (e.g., the display 230 of FIG. 4). The support plate 340 may be the same as the support plate 2022 illustrated in FIG. 4. The support plate 340 may be seated on the hinge cover 310. The flexible circuit board 320 and the block 330 may be disposed between the hinge cover 310 and the support plate 340. The support plate 340 may include a first support plate 341 coupled to a first housing 3011 and a second support plate 342 coupled to a second housing 3012. The electronic device (e.g., the electronic device 200 of FIG. 4) may include a housing 301 including the first housing 3011 and the second housing 3012. The housing 301 may be the same as the housing 201 illustrated in FIG. 4. The first housing 3011 may be the same as the first housing 210 illustrated in FIG. 4. The second housing 3012 may be the same as the second housing 220 illustrated in FIG. 4.

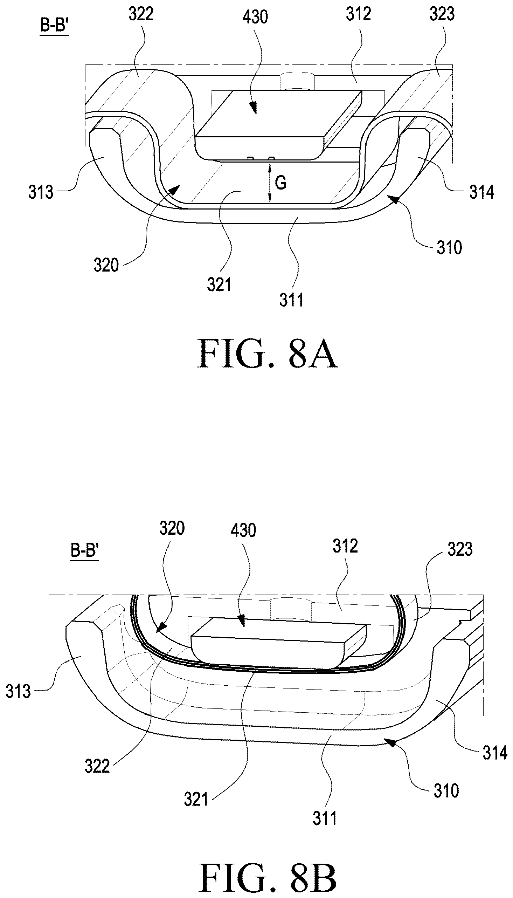

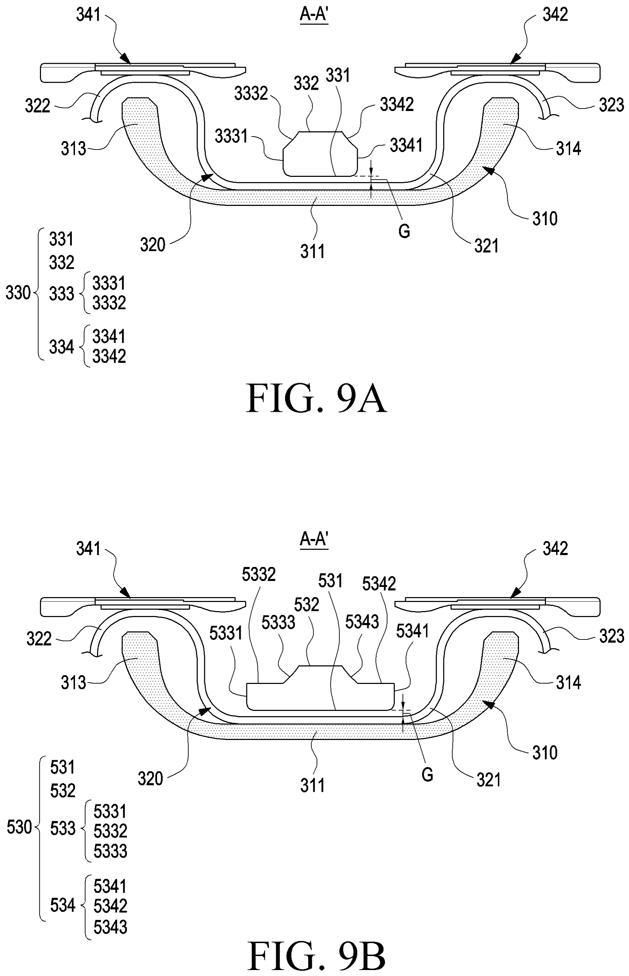

FIG. 7A is a cross-sectional view taken along line A-A' of area M illustrated in FIG. 6 when an electronic device (e.g., the electronic device 101 of FIG. 2) is in an unfolded state. FIG. 7B is a cross-sectional view taken along line A-A' of area M illustrated in FIG. 6 when an electronic device (e.g., the electronic device 101 of FIG. 3) is in a folded state. FIG. 8A is a perspective view cut along line B-B' of area M illustrated in FIG. 6 when an electronic device (e.g., the electronic device 101 of FIG. 2) is in an unfolded state. FIG. 8B is a perspective view cut along line B-B' of area M illustrated in FIG. 6 when an electronic device (e.g., the electronic device 101 of FIG. 3) is in a folded state. Components described with reference to FIGS. 7A, 7B, 8A, and 8B may be identical in whole or part to the components described with reference to FIGS. 1 to 6. Components described with reference to FIGS. 7A, 7B, 8A, and 8B may be identical in whole or part to the components described with reference to FIGS. 9A to 14H.

According to an embodiment, the first housing 3011 and the second housing 3012 may rotate with respect to a folding axis FX. A hinge (e.g., the hinge 2021 of FIG. 4) may rotatably couple the first housing 3011 and the second housing 3012 and may provide the folding axis FX. The hinge 2021 may be disposed inside the hinge cover 310. The flexible circuit board 320 may extend across the hinge cover 310 and may extend in a direction intersecting the folding axis FX. The block 330 may be coupled to the hinge cover 310, and the folding axis FX may extend through the block 330. The extending direction of the block 330 and the folding axis FX may intersect.

According to an embodiment, when the first housing 3011 and the second housing 3012 are in an unfolded state as illustrated in FIG. 7A, the block 330 may be spaced apart from the flexible circuit board 320. A gap G may be formed between the block 330 and the flexible circuit board 320. When the first housing 3011 and the second housing 3012 are in a folded state as illustrated in FIG. 7B, the flexible circuit board 320 may be bent toward the folding axis FX. When the first housing 3011 and the second housing 3012 are folded with respect to the folding axis FX, the flexible circuit board 320 may move in a direction away from the hinge cover 310. When the first housing 3011 and the second housing 3012 are in a folded state, the block 330 and the flexible circuit board 320 may contact each other. The block 330 may limit movement of the flexible circuit board 320.

According to an embodiment, the electronic device (e.g., the electronic device 200 of FIG. 4) may include a block 430. The block 430 described with reference to FIGS. 8A and 8B may be the same as the block 330 described with reference to FIGS. 5 to 7B except for its shape. The description of the block 430 described with reference to FIGS. 8A and 8B may be equally applied to the description of the block 330 described with reference to FIGS. 5 to 7B.

According to an embodiment, the hinge cover 310 may include a cover plate 311. The cover plate 311 may be disposed between the first housing 3011 and the second housing 3012. The cover plate 311 may be flat or may have a shape convex in a direction opposite to the direction in which the flexible circuit board 320 is positioned. The flexible circuit board 320 may be seated on the cover plate 311. The hinge cover 310 may include a cover wall 312. The cover wall 312 may be coupled to the cover plate 311. The cover wall 312 may extend from the cover plate 311 in a direction parallel to the folding axis FX. The block 330, 430 may be coupled to the cover wall 312. The hinge cover 310 may include a first side wall 313. The first side wall 313 may extend in a curved manner from the cover plate 311. The first side wall 313 may be curved from the cover plate 311 toward the first housing 3011. The hinge cover 310 may include a second side wall 314. The second side wall 314 may extend in a curved manner from the cover plate 311. The second side wall 314 may be curved from the cover plate 311 toward the second housing 3012.

According to an embodiment, the flexible circuit board 320 may include a first portion 321, a second portion 322, and a third portion 323. The first portion 321, the second portion 322, and the third portion 323 may be integrally formed. The first portion 321 may be seated on the cover plate 311. The first portion 321 may be positioned between the cover plate 311 and the block 330, 430. The second portion 322 may be disposed to cover the first side wall 313. The second portion 322 may extend in a curved manner from the first portion 321 toward the first housing 3011. The third portion 323 may be disposed to cover the second side wall 314. The third portion 323 may extend in a curved manner from the first portion 321 toward the second housing 3012.

According to an embodiment, when an electronic device (e.g., the electronic device 101 of FIG. 2) is in an unfolded state, a gap G may be formed between the block 430 and the flexible circuit board 320. The block 430 and the first portion 321 may be spaced apart. The second portion 322 may be disposed to cover the first side wall 313. The third portion 323 may be disposed to cover the second side wall 314.

According to an embodiment, when an electronic device (e.g., the electronic device 101 of FIG. 3) is in a folded state, the flexible circuit board 320 and the block 430 may contact each other. When the electronic device 101 is folded, the second portion 322 may move toward the block 430. When the electronic device 101 is folded, the third portion 323 may move toward the block 430. When the electronic device 101 is in a folded state, the first portion 321 may be spaced apart from the cover plate 311. When the electronic device 101 is in a folded state, a gap G1 may be formed between the first portion 321 and the cover plate 311. When the electronic device 101 is in a folded state, the second portion 322 may be spaced apart from the first side wall 313. When the electronic device 101 is in a folded state, the third portion 323 may be spaced apart from the second side wall 314.

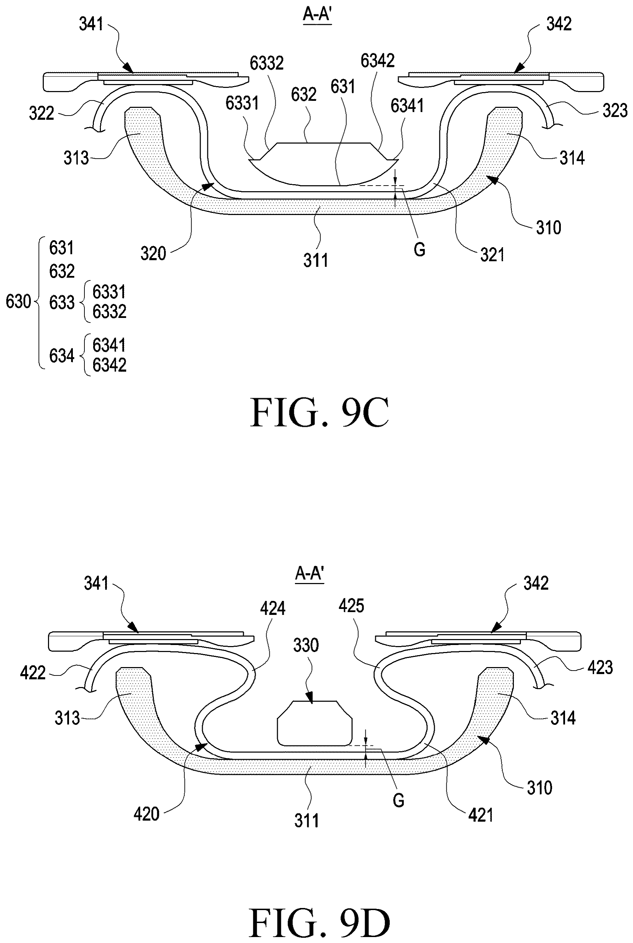

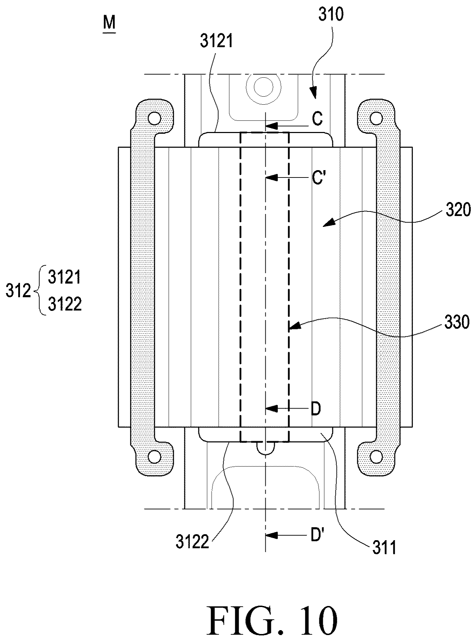

FIGS. 9A, 9B, 9C, and 9D are cross-sectional views taken along line A-A' of area M illustrated in FIG. 6 according to various embodiments. Components described with reference to FIGS. 9A, 9B, 9C, and 9D may be identical in whole or part to the components described with reference to FIGS. 1 to 8B. Components described with reference to FIGS. 9A, 9B, 9C, and 9D may be identical in whole or part to the components described with reference to FIGS. 10 to 14H.

According to an embodiment, the block 330, 530, 630 may be disposed inside the hinge cover 310. The block 330, 530, 630 may be disposed between the first side wall 313 and the second side wall 314. The block 330, 530, 630 may be spaced apart from the cover plate 311 of the hinge cover 310 to form a gap G.

According to an embodiment, at least a portion of the flexible circuit board 320, 420 may be disposed between the block 330, 530, 630 and the hinge cover 310. The first portion 321, 421 of the flexible circuit board 320, 420 may be disposed between the cover plate 311 and the block 330, 530, 630.

Referring to FIG. 9A, the block 330 may have a polygonal cross-sectional shape. The block 330 may include a first surface 331. The first surface 331 may be a surface facing the flexible circuit board 320. A gap G may be formed between the first surface 331 and the first portion 321. The first surface 331 may be named a "lower surface." The block 330 may include a second surface 332. The second surface 332 may be a surface opposite to the first surface 331. The second surface 332 may be spaced apart from the first surface 331 in the extending direction of the folding axis FX. The second surface 332 may be named an "upper surface." The block 330 may include a first side surface 333. The first side surface 333 may connect the first surface 331 and the second surface 332. The first side surface 333 may face the second portion 322 of the flexible circuit board 320. The first side surface 333 may include a 1-1th side surface 3331 and a 1-2th side surface 3332. The 1-1th side surface 3331 may connect the first surface 331 and the 1-2th side surface 3332. The 1-2th side surface 3332 may connect the second surface 332 and the 1-1th side surface 3331. The 1-1th side surface 3331 and the 1-2th side surface 3332 may form an included angle. The block 330 may include a second side surface 334. The second side surface 334 may connect the first surface 331 and the second surface 332. The second side surface 334 may face the third portion 323 of the flexible circuit board 320. The second side surface 334 may include a 2-1th side surface 3341 and a 2-2th side surface 3342. The 2-1th side surface 3341 may connect the first surface 331 and the 2-2th side surface 3342. The 2-2th side surface 3342 may connect the second surface 332 and the 2-1th side surface 3341. The 2-1th side surface 3341 and the 2-2th side surface 3342 may form an included angle.

Referring to FIG. 9B, the block 530 may have a polygonal cross-sectional shape. The block 530 may include a first surface 531. The first surface 531 may be a surface facing the flexible circuit board 320. A gap G may be formed between the first surface 531 and the first portion 321. The first surface 531 may be named a "lower surface." The block 530 may include a second surface 532. The second surface 532 may be a surface opposite to the first surface 531. The second surface 532 may be spaced apart from the first surface 531 in the extending direction of the folding axis FX. The second surface 532 may be named an "upper surface." The block 530 may include a first side surface 533. The first side surface 533 may connect the first surface 531 and the second surface 532. The first side surface 533 may face the second portion 322 of the flexible circuit board 320. The first side surface 533 may include a 1-1th side surface 5331, a 1-2th side surface 5332, and a 1-3th side surface 5333. The 1-1th side surface 5331 may connect the first surface 531 and the 1-2th side surface 5332. The 1-2th side surface 5332 may connect the 1-1th side surface 5331 and the 1-3th side surface 5333. The 1-3th side surface 5333 may connect the second surface 532 and the 1-2th side surface 5332. The 1-1th side surface 5331 and the 1-2th side surface 5332 may form an included angle. The 1-2th side surface 5332 and the 1-3th side surface 5333 may form an included angle. The block 530 may include a second side surface 534. The second side surface 534 may connect the first surface 531 and the second surface 532. The second side surface 534 may face the second portion 322 of the flexible circuit board 320. The second side surface 534 may include a 2-1th side surface 5341, a 2-2th side surface 5342, and a 2-3th side surface 5343. The 2-1th side surface 5341 may connect the first surface 531 and the 2-2th side surface 5342. The 2-2th side surface 5342 may connect the 2-1th side surface 5341 and the 2-3th side surface 5343. The 2-3th side surface 5343 may connect the second surface 532 and the 2-2th side surface 5342. The 2-1th side surface 5341 and the 2-2th side surface 5342 may form an included angle. The 2-2th side surface 5342 and the 2-3th side surface 5343 may form an included angle.

Referring to FIG. 9C, at least a portion of the cross-sectional shape of the block 630 may be curved. The block 630 may include a first surface 631. The first surface 631 may be a surface facing the flexible circuit board 320. A gap G may be formed between the first surface 631 and the first portion 321. The first surface 631 may be curved. The first surface 631 may have a shape convex toward the flexible circuit board 320. The first surface 631 may be convex toward the first portion 321 of the flexible circuit board 320. The first surface 631 may be named a "lower surface." The block 630 may include a second surface 632. The second surface 632 may be a surface opposite to the first surface 631. The second surface 632 may be spaced apart from the first surface 631 in the extending direction of the folding axis FX. The second surface 632 may be named an "upper surface." The block 630 may include a first side surface 633. The first side surface 633 may connect the first surface 631 and the second surface 632. The first side surface 633 may face the second portion 322 of the flexible circuit board 320. The first side surface 633 may include a 1-1th side surface 6331 and a 1-2th side surface 6332. The 1-1th side surface 6331 may connect the first surface 631 and the 1-2th side surface 6332. The 1-2th side surface 6332 may connect the second surface 632 and the 1-1th side surface 6331. The 1-1th side surface 6331 and the 1-2th side surface 6332 may form an included angle. The block 630 may include a second side surface 634. The second side surface 634 may connect the first surface 631 and the second surface 632. The second side surface 634 may face the third portion 323 of the flexible circuit board 320. The second side surface 634 may include a 2-1th side surface 6341 and a 2-2th side surface 6342. The 2-1th side surface 6341 may connect the first surface 631 and the 2-2th side surface 6342. The 2-2th side surface 6342 may connect the second surface 632 and the 2-1th side surface 6341. The 2-1th side surface 6341 and the 2-2th side surface 6342 may form an included angle.

Referring to FIG. 9D, the flexible circuit board 420 may have a shape with at least a portion bent toward the block 330. The block 330 may be the same as the block 330 described with reference to FIG. 9A. The flexible circuit board 420 may include a first portion 421. The first portion 421 may be spaced apart from the block 330 and may form a gap G with the block 330. The flexible circuit board 420 may include a second portion 422. The second portion 422 may be formed to cover the first side wall 313. The flexible circuit board 420 may include a third portion 423. The third portion 423 may be formed to cover the second side wall 314. The flexible circuit board 420 may include a first curved portion 424. The first curved portion 424 may connect the first portion 421 and the second portion 422. The first curved portion 424 may extend convexly toward the block 330. The flexible circuit board 420 may include a second curved portion 425. The second curved portion 425 may connect the first portion 421 and the third portion 423. The second curved portion 425 may extend convexly toward the block 330. The first curved portion 424 and the second curved portion 425 may extend convexly in opposite directions to each other.

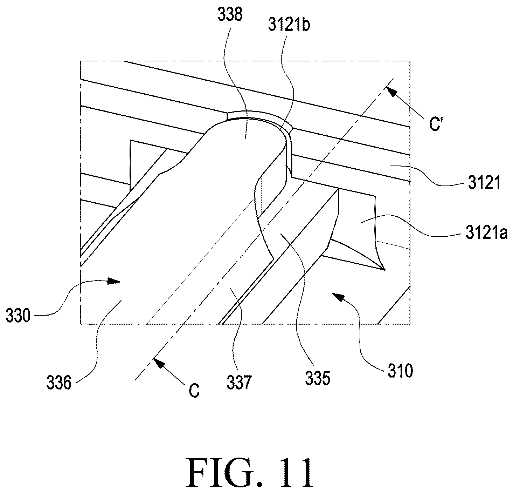

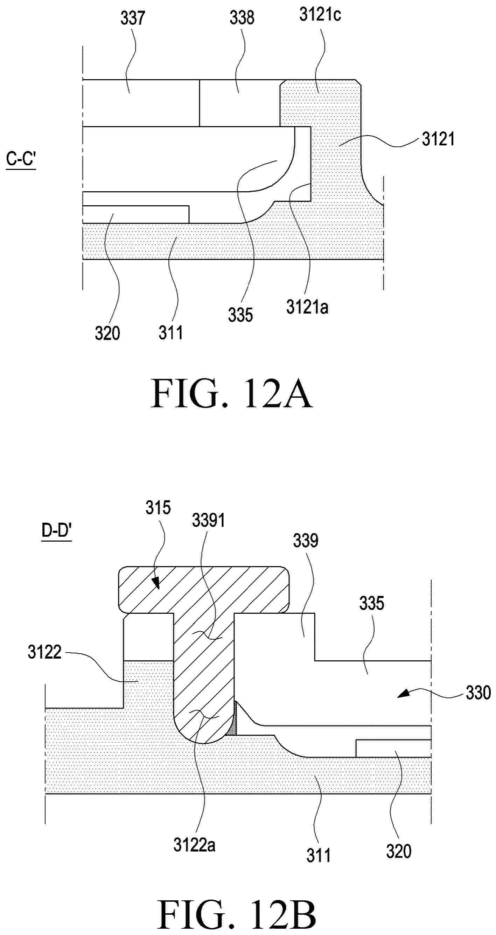

FIG. 10 is an enlarged view of area M illustrated in FIG. 6. FIG. 11 is an enlarged view illustrating the coupling portion between the cover wall 3121 and the block 330. Components described with reference to FIGS. 10 and 11 may be identical in whole or part to the components described with reference to FIGS. 1 to 9D. Components described with reference to FIGS. 10 and 11 may be identical in whole or part to the components described with reference to FIGS. 12A to 14H.

According to an embodiment, the hinge cover 310 may include a cover plate 311 and a cover wall 312. The flexible circuit board 320 may cross a space between the cover plate 311 and the block 330. The block 330 may be coupled to the cover wall 312.

According to an embodiment, the cover wall 312 may include a first cover wall 3121. The cover wall 312 may include a second cover wall 3122. The flexible circuit board 320 may be disposed between the first cover wall 3121 and the second cover wall 3122. One end of the block 330 may be coupled to the first cover wall 3121, and the other end may be coupled to the second cover wall 3122. The block 330 may extend between the first cover wall 3121 and the second cover wall 3122.

According to an embodiment, the first cover wall 3121 may include a groove 3121a. The groove 3121a may be recessed in a direction in which the block 330 is inserted. The first cover wall 3121 may include a recess 3121b. The recess 3121b may be recessed in a direction in which the block 330 is inserted. The groove 3121a and the recess 3121b may be connected. The recess 3121b may protrude from the groove 3121a in a direction intersecting the extending direction of the groove 3121a.

According to an embodiment, the block 330 may be inserted into at least a portion of the first cover wall 3121. The block 330 may include a first body 335. The first body 335 may be inserted into the groove 3121a. An end of the first body 335 may be inserted into and hooked to the groove 3121a. The block 330 may include a second body 336. The second body 336 may protrude from the first body 335. The first body 335 and the second body 336 may be integral. The block 330 may include a third body 337. The third body 337 may connect the first body 335 and the second body 336. The block 330 may include a block protrusion 338. The block protrusion 338 may protrude from the second body 336 toward the recess 3121b. The block protrusion 338 may be inserted into the recess 3121b.

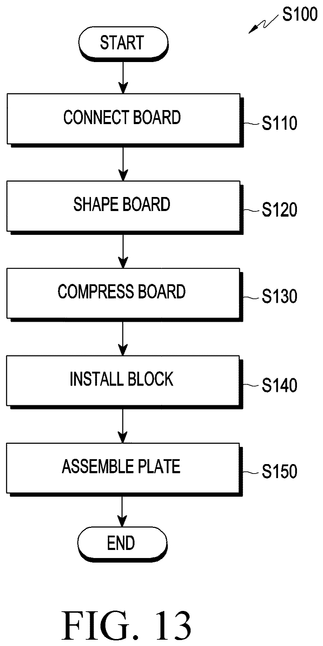

FIG. 12A is a cross-sectional view taken along line C-C' illustrated in FIG. 10. FIG. 12B is a cross-sectional view taken along line D-D' illustrated in FIG. 10. Components described with reference to FIGS. 12A and 12B may be identical in whole or part to the components described with reference to FIGS. 1 to 11. Components described with reference to FIGS. 12A and 12B may be identical in whole or part to the components described with reference to FIGS. 13 to 14H.

According to an embodiment, the block 330 may be coupled to the hinge cover 310 by a hook method or a screw fastening method. However, the coupling method between the block 330 and the hinge cover 310 is not limited to the above. For example, the block 330 and the hinge cover 310 may be integrally formed or may be connected through a separate adhesive member (not shown).

According to an embodiment, the first body 335 of the block 330 may be inserted into the groove 3121a formed in the first cover wall 3121. The first cover wall 3121 may include a wall protrusion 3121c. The wall protrusion 3121c may be spaced apart from the cover plate 311. The groove 3121a may be formed between the cover plate 311 and the wall protrusion 3121c. The first body 335 may be inserted into the groove 3121a and may be hooked to the wall protrusion 3121c. A recess (e.g., the recess 3121b of FIG. 11) may be formed recessed in the wall protrusion 3121c. The block protrusion 338 may be positioned offset from the wall protrusion 3121c and may be inserted into the recess (e.g., the recess 3121b of FIG. 11).

According to an embodiment, the electronic device (e.g., the electronic device 200 of FIG. 4) may include a coupling member 315. The coupling member 315 may couple the block 330 and the hinge cover 310. The block 330 may include a coupling body 339 protruding from the first body 335. The coupling body 339 may include a body hole 3391. The second cover wall 3122 may include a cover hole 3122a. The body hole 3391 and the cover hole 3122a may face each other. The coupling member 315 may penetrate the body hole 3391 and the cover hole 3122a. The coupling member 315 may be a screw.

According to an embodiment, the block 330 may be coupled to each of the first cover wall 3121 and the second cover wall 3122. The block 330 may be coupled to both the first cover wall 3121 and the second cover wall 3122 in the manner illustrated in FIG. 12A. The block 330 may be coupled to both the first cover wall 3121 and the second cover wall 3122 in the manner illustrated in FIG. 12B. The block 330 may be coupled to one of the first cover wall 3121 and the second cover wall 3122 in the manner illustrated in FIG. 12A, and to the other in the manner illustrated in FIG. 12B.

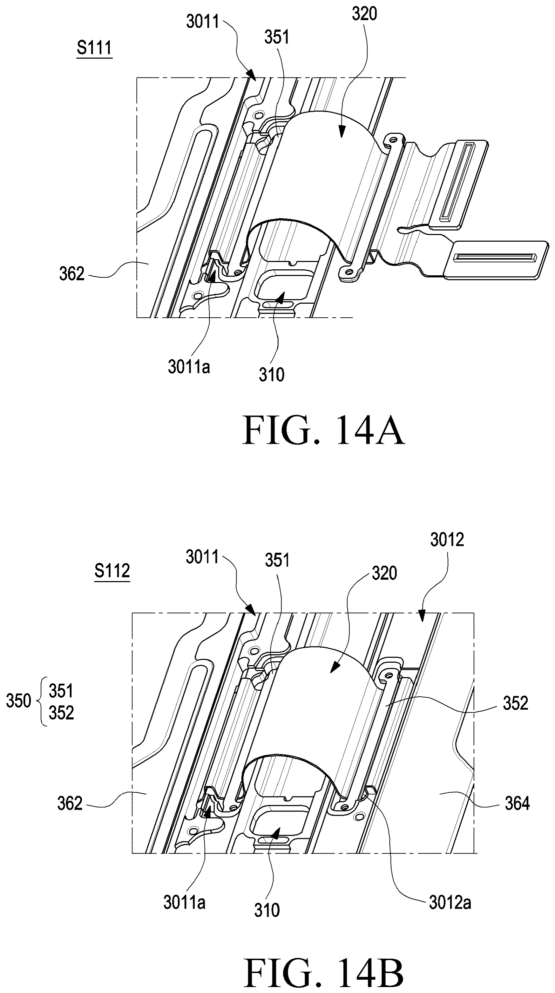

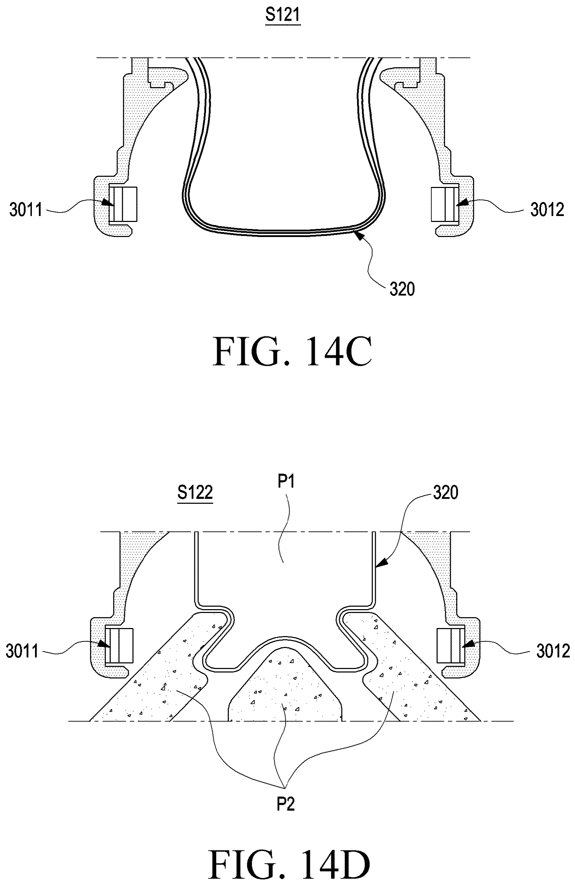

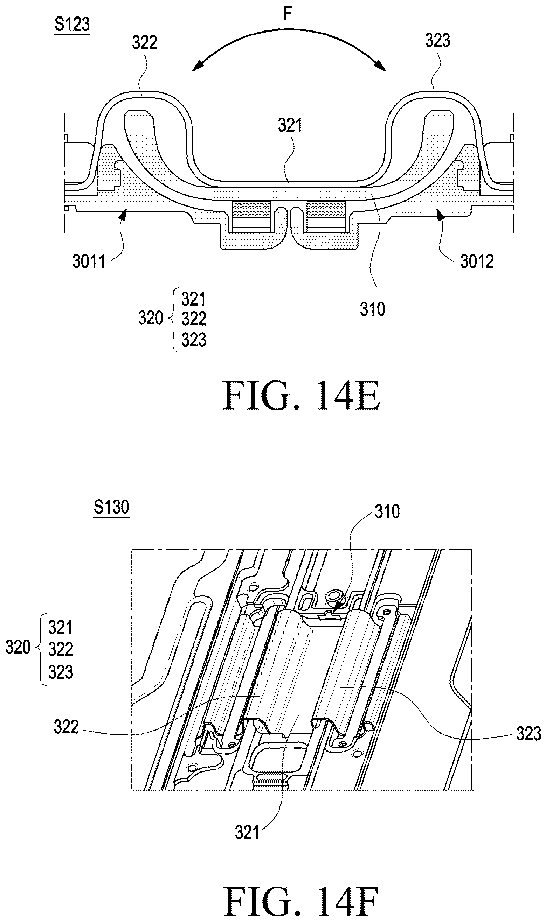

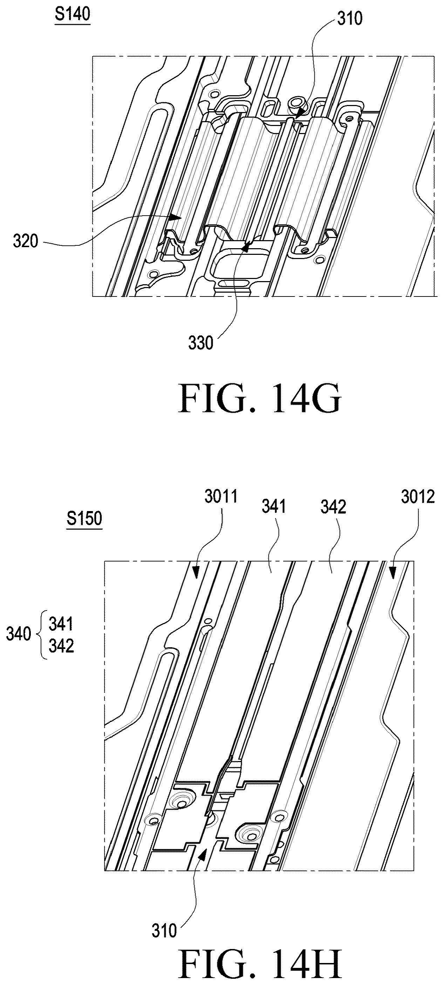

FIG. 13 is a block diagram showing a method of assembling a hinge assembly (e.g., the hinge assembly 202 of FIG. 4) according to an embodiment of the disclosure. FIGS. 14A, 14B, 14C, 14D, 14E, 14F, 14G, and 14H are views sequentially showing a method of assembling a hinge assembly (e.g., the hinge assembly 202 of FIG. 4). Components described with reference to FIGS. 13, 14A, 14B, 14C, 14D, 14E, 14F, 14G, and 14H may be identical in whole or part to the components described with reference to FIGS. 1 to 12B.

According to an embodiment, the electronic device (e.g., the electronic device 200 of FIG. 4) may have a manufacturing method S100. The electronic device (e.g., the electronic device 200 of FIG. 4) may be manufactured by the manufacturing method S100.

According to an embodiment, the manufacturing method S100 of the electronic device 200 may include a first process S110 for connecting a board. The manufacturing method S100 of the electronic device 200 may include a second process S120 for shaping a board. The manufacturing method S100 of the electronic device 200 may include a third process S130 for compressing a board. The manufacturing method S100 of the electronic device 200 may include a fourth process S140 for installing a block. The manufacturing method S100 of the electronic device 200 may include a fifth process S150 for assembling a plate.

According to an embodiment, as illustrated in FIG. 14A, the first process S110 may include a 1-1th process S111. The 1-1th process S111 may be a process for connecting the flexible circuit board 320 with a first circuit board 362. The first circuit board 362 may be disposed in a first housing 3011. The first housing 3011 may include a first board support portion 3011a in which at least a portion of the flexible circuit board 320 is disposed. The electronic device 200 may include a first bar 351 disposed on the first board support portion 3011a. At least a portion of the flexible circuit board 320 may be disposed between the first bar 351 and the first board support portion 3011a.

According to an embodiment, as illustrated in FIG. 14B, the first process S110 may include a 1-2th process S112. The 1-2th process S112 may be a process for connecting the flexible circuit board 320 with a second circuit board 364. The second circuit board 364 may be disposed in a second housing 3012. The second housing 3012 may include a second board support portion 3012a in which at least a portion of the flexible circuit board 320 is disposed. The electronic device 200 may include a second bar 352 disposed on the second board support portion 3012a. At least a portion of the flexible circuit board 320 may be disposed between the second bar 352 and the second board support portion 3012a. The electronic device 200 may include a bar 350 configured to support the flexible circuit board 320. The bar 350 may include the first bar 351 and the second bar 352.

According to an embodiment, as illustrated in FIG. 14C, the second process S120 may include a 2-1th process S121. The 2-1th process S121 may be a process for folding the first housing 3011 and the second housing 3012. The flexible circuit board 320 may be at least partially folded with respect to the first housing 3011 and the second housing 3012.

According to an embodiment, as illustrated in FIG. 14D, the second process S120 may include a 2-2th process S122. The 2-2th process S122 may be a process for shaping the shape of the flexible circuit board 320 by compressing the flexible circuit board 320 between a first mold P1 and a second mold P2.

According to an embodiment, as illustrated in FIG. 14E, the second process S120 may include a 2-3th process S113. The 2-3th process S123 may be a process for unfolding the shaped flexible circuit board 320. The shaped flexible circuit board 320 may be divided into a first portion 321 seated on the hinge cover 310, a second portion 322 corresponding to the first housing 3011, and a third portion 323 corresponding to the second housing 3012.

According to an embodiment, as illustrated in FIG. 14F, the third process S130 may be a process for compressing the flexible circuit board 320 toward the hinge cover 310. The first portion 321 may be in close contact with the hinge cover 310, and the second portion 322 and the third portion 323 may have a convex shape.

According to an embodiment, as illustrated in FIG. 14G, the fourth process S140 may be a process for coupling the block 330. The block 330 may be coupled to the hinge cover 310 in the manner illustrated in FIGS. 11, 12A, and 12B.

According to an embodiment, as illustrated in FIG. 14H, the fifth process S150 may be a process for coupling the support plate 340. A first support plate 341 may be coupled to the first housing 3011. A second support plate 342 may be coupled to the second housing 3012. The support plate 340 may be seated on the upper side of the hinge cover 310. The support plate 340 may be disposed to cover at least a portion of the flexible circuit board 320.

The electronic device may include a first housing and a second housing rotatably coupled to each other. The electronic device may include a flexible display disposed on the first housing and the second housing. The first housing and the second housing are rotatably coupled to each other through a hinge, and a circuit board is disposed in each of the first housing and the second housing. The electronic device includes a flexible circuit board connecting the circuit boards disposed in each of the first housing and the second housing, and the flexible circuit board extends across a rotation axis where the hinge is positioned. When the first housing and the second housing are rotated, a portion of the flexible circuit board adjacent to the rotation axis undergoes deformation.

An object of the disclosure may be preventing or reducing lifting of the flexible circuit board.

An object of the disclosure may be reducing damage to the flexible circuit board.

Objects of the disclosure are not limited to the above-mentioned problems, and may be variously determined within a range that does not depart from the spirit and scope of the disclosure.

An electronic device according to various embodiments of the disclosure may prevent or reduce lifting of the flexible circuit board by disposing a block coupled to the hinge cover.

An electronic device according to various embodiments of the disclosure may secure a gap between the block and the flexible circuit board by coupling the block to the hinge cover.

The effects obtainable in the disclosure are not limited to the effects mentioned above, and other effects not mentioned can be clearly understood by those skilled in the art to which the disclosure pertains from the description below.

An electronic device (e.g., 200 of FIGS. 1 to 14H) according to an embodiment of the disclosure may include a first housing 210; 3011.

The electronic device (e.g., 200 of FIGS. 1 to 14H) according to an embodiment of the disclosure may include a second housing 220; 3012 rotatably coupled to the first housing 210; 3011.

The electronic device (e.g., 200 of FIGS. 1 to 14H) according to an embodiment of the disclosure may include a hinge 2021 rotatably connecting the first housing 210; 3011 and the second housing 220; 3012.

The electronic device (e.g., 200 of FIGS. 1 to 14H) according to an embodiment of the disclosure may include a flexible display 230 including an area corresponding to the first housing 210; 3011 and an area corresponding to the second housing 220; 3012.

The electronic device (e.g., 200 of FIGS. 1 to 14H) according to an embodiment of the disclosure may include a hinge cover 310 covering the hinge 2021, at least a portion thereof being disposed between the first housing 210; 3011 and the second housing 220; 3012.

The electronic device (e.g., 200 of FIGS. 1 to 14H) according to an embodiment of the disclosure may include a flexible circuit board 266; 320 extending across the hinge cover 310 from a position corresponding to the first housing 210; 3011 toward a position corresponding to the second housing 220; 3012.

The electronic device (e.g., 200 of FIGS. 1 to 14H) according to an embodiment of the disclosure may include a block (e.g., 330; 430; 530; 630 of FIGS. 1 to 14H) spaced apart from the flexible circuit board (e.g., 266; 320 of FIGS. 1 to 14H).

A block (e.g., 330; 430; 530; 630 of FIGS. 1 to 14H) according to an embodiment of the disclosure may be coupled to a hinge cover (e.g., 2021; 310 of FIGS. 1 to 14H).

The hinge cover (e.g., 310 of FIGS. 1 to 14H) according to an embodiment of the disclosure may include a cover plate (e.g., 311 of FIGS. 1 to 14H) spaced apart from the block (e.g., 330 of FIGS. 1 to 14H).

The hinge cover (e.g., 310 of FIGS. 1 to 14H) according to an embodiment of the disclosure may include a cover wall (e.g., 312 of FIGS. 1 to 14H) protruding from the cover plate (e.g., 311 of FIGS. 1 to 14H) and coupled to the block (e.g., 330 of FIGS. 1 to 14H).

At least a portion of the flexible circuit board (e.g., 320 of FIGS. 1 to 14H) according to an embodiment of the disclosure may pass through a space between the cover plate (e.g., 311 of FIGS. 1 to 14H) and the block (e.g., 330 of FIGS. 1 to 14H).

The flexible circuit board (e.g., 320 of FIGS. 1 to 14H) according to an embodiment of the disclosure may be spaced apart from the block (e.g., 330 of FIGS. 1 to 14H) when the first housing (e.g., 3011 of FIGS. 1 to 14H) and the second housing (e.g., 3012 of FIGS. 1 to 14H) rotate in a direction where they become farther from each other, and may be spaced apart from the hinge cover (e.g., 310 of FIGS. 1 to 14H) when the first housing (e.g., 3011 of FIGS. 1 to 14H) and the second housing (e.g., 3012 of FIGS. 1 to 14H) rotate in a direction where they become closer to each other.

The hinge cover (e.g., 310 of FIGS. 1 to 14H) according to an embodiment of the disclosure may include a support plate (e.g., 311 of FIGS. 1 to 14H) spaced apart from the block (e.g., 330 of FIGS. 1 to 14H) and configured such that at least a portion of the flexible circuit board (e.g., 320 of FIGS. 1 to 14H) is seated thereon.

The hinge cover (e.g., 310 of FIGS. 1 to 14H) according to an embodiment of the disclosure may include a first side wall (e.g., 313 of FIGS. 1 to 14H) extending from the support plate (e.g., 311 of FIGS. 1 to 14H) toward the first housing (e.g., 3011 of FIGS. 1 to 14H).

The hinge cover (e.g., 310 of FIGS. 1 to 14H) according to an embodiment of the disclosure may include a second side wall (e.g., 314 of FIGS. 1 to 14H) extending from the support plate (e.g., 311 of FIGS. 1 to 14H) toward the second housing (e.g., 3012 of FIGS. 1 to 14H).

The block (e.g., 330 of FIGS. 1 to 14H) according to an embodiment of the disclosure may be disposed between the first side wall (e.g., 313 of FIGS. 1 to 14H) and the second side wall (e.g., 314 of FIGS. 1 to 14H).

The flexible circuit board (e.g., 320 of FIGS. 1 to 14H) according to an embodiment of the disclosure may include a first portion (e.g., 321 of FIGS. 1 to 14H) seated on the support plate (e.g., 311 of FIGS. 1 to 14H).

The flexible circuit board (e.g., 320 of FIGS. 1 to 14H) according to an embodiment of the disclosure may include a second portion (e.g., 322 of FIGS. 1 to 14H) covering at least a portion of the first side wall (e.g., 313 of FIGS. 1 to 14H).

The flexible circuit board (e.g., 320 of FIGS. 1 to 14H) according to an embodiment of the disclosure may include a third portion (e.g., 323 of FIGS. 1 to 14H) covering at least a portion of the second side wall (e.g., 314 of FIGS. 1 to 14H).

The block (e.g., 330 of FIGS. 1 to 14H) according to an embodiment of the disclosure may be positioned between the second portion (e.g., 322 of FIGS. 1 to 14H) and the third portion (e.g., 323 of FIGS. 1 to 14H).

The hinge cover (e.g., 310 of FIGS. 1 to 14H) according to an embodiment of the disclosure may include a first cover wall (e.g., 3121 of FIGS. 1 to 14H) protruding from the cover plate (e.g., 311 of FIGS. 1 to 14H).

The hinge cover (e.g., 310 of FIGS. 1 to 14H) according to an embodiment of the disclosure may include a second cover wall (e.g., 3122 of FIGS. 1 to 14H) protruding from the cover plate (e.g., 311 of FIGS. 1 to 14H) and spaced apart from the first cover wall (e.g., 3121 of FIGS. 1 to 14H).

The block (e.g., 330 of FIGS. 1 to 14H) according to an embodiment of the disclosure may extend between the first cover wall (e.g., 3121 of FIGS. 1 to 14H) and the second cover wall (e.g., 3122 of FIGS. 1 to 14H).

The first cover wall (e.g., 3121 of FIGS. 1 to 14H) according to an embodiment of the disclosure may include a groove (e.g., 3121a of FIGS. 1 to 14H) into which the block (e.g., 330 of FIGS. 1 to 14H) is inserted.

The block (e.g., 330 of FIGS. 1 to 14H) according to an embodiment of the disclosure may include a first body (e.g., 336 of FIGS. 1 to 14H) inserted into at least a portion of the first cover wall (e.g., 3121 of FIGS. 1 to 14H).

The first cover wall (e.g., 3121 of FIGS. 1 to 14H) according to an embodiment of the disclosure may include a protrusion (e.g., 3121c of FIGS. 1 to 14H) on which the first body (e.g., 336 of FIGS. 1 to 14H) is hooked.

The block (e.g., 330 of FIGS. 1 to 14H) according to an embodiment of the disclosure may include a body hole (e.g., 3391 of FIGS. 1 to 14H) inserted into at least a portion of the first cover wall (e.g., 3121 of FIGS. 1 to 14H), into which a coupling member (e.g., 315 of FIGS. 1 to 14H) penetrating the second cover wall (e.g., 3122 of FIGS. 1 to 14H) is inserted.

The electronic device (e.g., 200 of FIGS. 1 to 14H) according to an embodiment of the disclosure may further include a coupling member (e.g., 315 of FIGS. 1 to 14H) penetrating the hinge cover (e.g., 310 of FIGS. 1 to 14H) and the block (e.g., 330 of FIGS. 1 to 14H).

The block (e.g., 630 of FIGS. 1 to 14H) according to an embodiment of the disclosure may include a first surface (e.g., 631 of FIGS. 1 to 14H) convex toward the hinge cover (e.g., 310 of FIGS. 1 to 14H).

The flexible circuit board (e.g., 420 of FIGS. 1 to 14H) according to an embodiment of the disclosure may include a first curved portion (e.g., 424 of FIGS. 1 to 14H) convex toward the block (e.g., 330 of FIGS. 1 to 14H).

The flexible circuit board (e.g., 420 of FIGS. 1 to 14H) according to an embodiment of the disclosure may include a second curved portion (e.g., 425 of FIGS. 1 to 14H) convex toward the block (e.g., 330 of FIGS. 1 to 14H) and spaced apart from the first curved portion (e.g., 424 of FIGS. 1 to 14H).

A plurality of hinges (e.g., 2022 of FIGS. 1 to 14H) according to an embodiment of the disclosure may be disposed to be spaced apart from each other in a direction in which the hinge cover (e.g., 310 of FIGS. 1 to 14H) extends.

The block (e.g., 330 of FIGS. 1 to 14H) according to an embodiment of the disclosure may be disposed between the plurality of hinges (e.g., 2022 of FIGS. 1 to 14H).

The electronic device (e.g., 200 of FIGS. 1 to 14H) according to an embodiment of the disclosure may include a support plate (e.g., 340 of FIGS. 1 to 14H) covering at least a portion of the block (e.g., 330 of FIGS. 1 to 14H).

The block (e.g., 330 of FIGS. 1 to 14H) according to an embodiment of the disclosure may be coupled to the cover wall (e.g., 312 of FIGS. 1 to 14H) and may form a gap with the cover plate (e.g., 311 of FIGS. 1 to 14H).

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device (101; 200) comprising:
a first housing (210; 3011);
a second housing (220; 3012) rotatably coupled to the first housing (210; 3011);
a hinge (2021) rotatably connecting the first housing (210; 3011) and the second housing (220; 3012);
a flexible display (230) including an area corresponding to the first housing (210; 3011) and an area corresponding to the second housing (220; 3012);
a hinge cover (310) configured to cover the hinge (2021), at least a portion of the hinge cover (310) being disposed between the first housing (210; 3011) and the second housing (220; 3012);
a flexible circuit board (266; 320) extending from a position corresponding to the first housing (210; 3011) to a position corresponding to the second housing (220; 3012); and
a block (330; 430; 530; 630) spaced apart from the flexible circuit board (266; 320).

2. The electronic device of claim 1,
wherein the hinge cover (310) comprises:
a cover plate (311) spaced apart from the block (330); and
a cover wall (312) protruding from the cover plate (311) and coupled to the block (330),
wherein at least a portion of the flexible circuit board (320) passes through a space between the cover plate (311) and the block (330).

3. The electronic device of claim 1 or 2,
wherein the flexible circuit board (320) is spaced apart from the block (330) when the first housing (3011) and the second housing (3012) rotate in a direction where the first housing (3011) and the second housing (3012) become farther from each other, and
wherein the flexible circuit board (320) is spaced apart from the hinge cover (310) when the first housing (3011) and the second housing (3012) rotate in a direction where the first housing (3011) and the second housing (3012) become closer to each other.

4. The electronic device of any one of claims 1 to 3,
wherein the hinge cover (310) comprises:
a cover plate (311) spaced apart from the block (330), and configured such that at least a portion of the flexible circuit board (320) is seated thereon;
a first side wall (313) extending from the cover plate (311) toward the first housing (3011); and
a second side wall (314) extending from the cover plate (311) toward the second housing (3012), and
wherein the block (330) is disposed between the first side wall (313) and the second side wall (314).

5. The electronic device of claim 4,
wherein the flexible circuit board (320) comprises:
a first portion (321) seated on the cover plate (311);
a second portion (322) covering at least a portion of the first side wall (313); and
a third portion (323) covering at least a portion of the second side wall (314).

6. The electronic device of claim 5,
wherein the block (330) is positioned between the second portion (322) and the third portion (323).

7. The electronic device of any one of claims 1 to 6,
wherein the hinge cover (310) comprises:
a cover plate (311) spaced apart from the block (330);
a first cover wall (3121) protruding from the cover plate (311); and
a second cover wall (3122) protruding from the cover plate (311) and spaced apart from the first cover wall (3121), and
wherein the block (330) extends between the first cover wall (3121) and the second cover wall (3122).

8. The electronic device of claims 7,
wherein the first cover wall (3121) includes a groove (3121a) into which the block (330) is inserted.

9. The electronic device of claim 7 or 8,
wherein the block (330) includes a first body (335) inserted into at least a portion of the first cover wall (3121),
wherein the first cover wall (3121) includes a wall protrusion (3121c) on which the first body (335) is hooked.

10. The electronic device of any one of claims 7 to 9,
wherein the block (330) comprises a body hole (3391) inserted into at least a portion of the first cover wall (3121), and wherein a coupling member (315) penetrating the second cover wall (3122) is inserted into the body hole (3391).

11. The electronic device of any one of claims 1 to 10, further comprising:
a coupling member (315) penetrating the hinge cover (310) and the block (330).

12. The electronic device of any one of claims 1 to 11,
wherein the block (630) includes a first surface (631) convex toward the hinge cover (310).

13. The electronic device of any one of claims 1 to 12,
wherein the flexible circuit board (420) includes:
a first curved portion (424) convex toward the block (330); and
a second curved portion (425) convex toward the block (330) and spaced apart from the first curved portion (424).

14. The electronic device of any one of claims 1 to 13,
wherein a plurality of the hinges (2021) are disposed to be spaced apart from each other along a direction in which the hinge cover (310) extends, and
wherein the block (330) is disposed between the plurality of the hinges (2021).

15. The electronic device of any one of claims 1 to 14, wherein
the block (330) is coupled to the hinge cover (310).
